# EUROPÄISCHE PATENTANMELDUNG

(11) **EP 0 849 871 A2**
(43) Veröffentlichungstag der Anmeldung: **24.06.1998**
(21) Anmeldenummer: 97810856.1
(22) Anmeldetag: 11.11.1997
(51) Int. Cl.: H02M 7/48

(54) **Stromrichterschaltungsanordnung mit einer Mehrzahl von parallelen Stromrichtern bzw. Stromrichterzweigen und dazwischen geschalteten Ausgleichsdrosseln**

(30) Priorität: 12.12.1996 DE 19651666
(71) Anmelder: ABB Daimler-Benz Transportation (Technology) GmbH, 13627 Berlin (DE)
(72) Erfinder: Elsener, Mathieu, 4310 Rheinfelden (CH); Enzensberger, Gernot, 5400 Baden (CH)
(74) Vertreter: Weibel, Beat

(57) **Zusammenfassung**

Es wird eine Stromrichterschaltungsanordnung mit mehreren parallelen Stromrichtern bzw. Stromrichterzweigen angegeben, bei welcher eine wirksame Stromgleichverteilung auf einfache Weise erreicht werden kann. Dies wird dadurch erreicht, dass Ausgleichsdrosseln, die zwischen zwei benachbarten Stromrichtern angeordnet sind, mindestens einen Ringkern umfassen und dass die Lastanschlüsse zweier benachbarter Stromrichter bzw. Stromrichterzweige von unterschiedlichen Seiten durch die Ringkerne geschlauft sind und zu einem gemeinsamen Laststromanschluss aller parallelen Stromrichter bzw. Stromrichterzweige zusammengeführt sind.

## Beschreibung

### Technisches Gebiet

Die Erfindung bezieht sich auf das Gebiet der Leistungselektronik. Sie geht aus von einer Stromrichterschaltungsanordnung gemäss dem Oberbegriff des ersten Anspruchs.

### Stand der Technik

Eine gattungsgemässe Schaltungsanordnung wird bereits in der Schweizer Patentschrift CH 682 531 A5 beschrieben. Es wird dort eine Stromrichterschaltungsanordnung mit mehreren parallelgeschalteten Teilumrichtern angegeben. Die Leistungshalbleiterschalter der Teilumrichter werden im wesentlichen synchron angesteuert. Aufgrund von Schaltzeitunterschieden bzw. unterschiedlichen Schaltverzögerungen der Leistungshalbleiterschalter verschiedener Teilumrichter kann der Fall auftreten, dass die Schalter eines Teilumrichters noch leiten, während diejenigen eines anderen bereits sperren. Dadurch müssen die noch leitenden Schalter einen höheren Strom tragen als die bereits sperrenden. Dies resultiert in einer Unsymmetrie des Strombelastungen der Teilumrichter, die im Extremfall zur Zerstörung von Schaltern auf Grund von thermischer Überlastung führen kann.

Zur Vergleichmässigung der Stromaufteilung auf die Teilumrichter wird in der oben genannten Schrift vorgeschlagen, zwischen den Teilumrichtern Ausgleichsdrosseln anzuordnen und mittels einer Regelvorrichtung die Flanken der Ein- und Ausschaltbefehle der Leistungshalbleiterschalter so zu beeinflussen, dass schlussendlich eine Stromgleichverteilung resultiert. Um eine wirksame Stromgleichverteilung zur erhalten, müssen die Ausgleichsdrosseln jedoch recht gross gewählt werden, und die Regelung benötigt auch einen erheblichen Aufwand.

### Darstellung der Erfindung

Aufgabe der vorliegenden Erfindung ist es deshalb, eine Stromrichterschaltungsanordnung mit mehreren parallelen Stromrichtern bzw. Stromrichterzweigen anzugeben, bei welcher eine wirksame Stromgleichverteilung auf einfache Weise erreicht werden kann. Diese Aufgabe wird bei einer Schaltungsanordnung der eingangs genannten Art durch die Merkmale des ersten Anspruchs gelöst.

Kern der Erfindung ist es also, dass die Ausgleichsdrosseln mindestens einen Ringkern umfassen und dass die Lastanschlüsse zweier benachbarter Stromrichter bzw. Stromrichterzweige von unterschiedlichen Seiten durch den Ringkern geschlauft sind und zu einem gemeinsamen Laststromanschluss aller parallelen Stromrichter bzw. Stromrichterzweige zusammengeführt sind. Tritt eine Unsymmetrie im Schaltverhalten der parallel betriebenen Stromrichter bzw. Stromrichterzweige auf, so übernehmen die Ringkerndrosseln während der Kommutierung des Laststromes auf bzw. von den Rücklaufdioden der Leistungshalbleiterschalter die Differenzspannung zwischen den Lastanschlüssen zweier benachbarten Stromrichter bzw. Stromrichterzweigen. Dadurch werden die Zweige während der Kommutierung entkoppelt und die andernfalls auftretende Fehlverteilung der Ströme auf ein unschädliches Mass reduziert.

Die Ringkerndrosseln weisen vorzugsweise eine nichtlineare Induktivität auf. Die Ringkerne können beispielsweise aus einem porösen, weichmagnetischen Pulververbundwerkstoff oder aus hochpermeablen Ringen mit einem Luftspalt bestehen.

Weitere Ausführungsbeispiele ergeben sich aus den entsprechenden abhängigen Ansprüchen.

Der Vorteil des erfindungsgemässen Aufbaus besteht darin, dass auf einfache Art und Weise eine wirksame Stromgleichverteilung erreicht wird, bzw. dass übrigbleibende Stromfehlverteilungen durch die Ringkerndrosseln aufgenommen werden. Dadurch kann die gesamte Stromrichterschaltungsanordnung verglichen mit dem Stand der Technik erheblich billiger und mit weniger technischem Aufwand hergestellt werden.

### Kurze Beschreibung der Zeichnungen

Nachfolgend wird die Erfindung anhand von Ausführungsbeispielen im Zusammenhang mit den Zeichnungen näher erläutert.

Es zeigen:

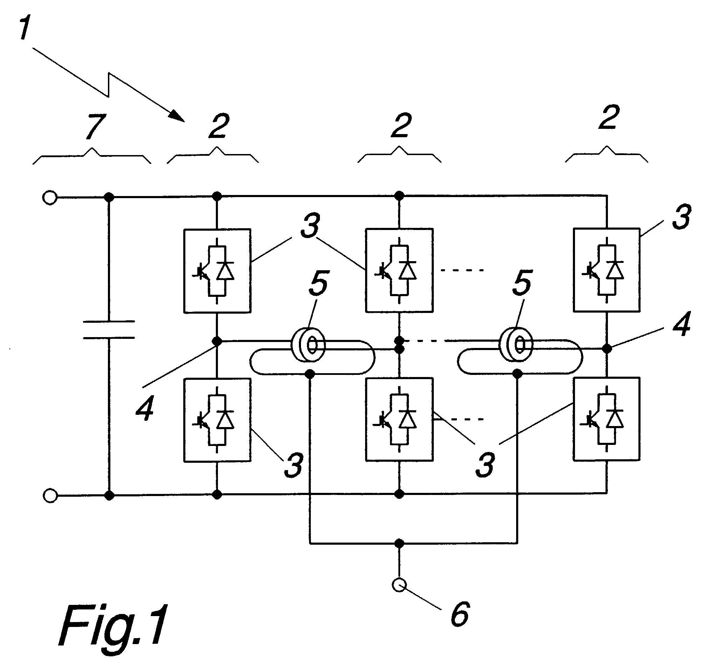

- **Fig. 1**: Eine schematische Darstellung der Erfindung;
Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

**Figur 1** zeigt eine schematische Darstellung einer erfindungsgemässen Stromrichterschaltungsanordnung 1. Diese umfasst einer Mehrzahl (dargestellt sind drei) von parallel geschalteten Stromrichtern bzw. Stromrichterzweigen 2, die an einen Zwischenkreis 7, insbesondere einen Gleichspannungszwischenkreis, dargestellt durch eine Kapazität, angeschlossen sind. Die Stromrichter 2 bzw. Stromrichterzweige 2 umfassen eine Serieschaltung von mindestens zwei Leistungshalbleiterschaltern 3. Besonders bevorzugt werden IGBTs mit dazu parallel geschalteter Rücklaufdiode. Die entsprechenden Leistungshalbleiterschalter 3 der parallel geschalteten Stromrichterzweige 2 werden von einer nicht dargestellten Ansteuerschaltung im wesentlichen synchron ein- und ausgeschaltet. Durch Parameterunterschiede der Ansteuerschaltungen, der Strompfade und der Schalter 3 kann bei der Kommutierung des Stromes dadurch, dass ein Schalter 3 früher als ein anderer schaltet, eine Stromfehlverteilung unter den Stromrichterzweigen 2 auftreten.

Nach der Erfindung wird nun zwischen die Lastanschlüsse 4 von zwei benachbarten Stromrichtern bzw. Stromrichterzweigen 2 eine Ausgleichsdrossel bestehend aus mindestens einer Ringkerndrossel geschaltet. Es können auch mehrere Ringkerndrosseln in Serie geschaltet sein. Die Lastanschlüsse 4 der benachbarten Stromrichterzweige 2 werden von unterschiedlichen Seiten durch den Ringkern 5 geschlauft und zu einem gemeinsamen Laststromanschluss 6 aller parallelen Stromrichter bzw. Stromrichterzweige zusammengeführt. Tritt nun eine Unsymmetrie im Schaltverhalten der parallelen Stromrichter 2 auf, so übernehmen die Ringkerndrosseln die dadurch erzeugte Differenzspannung zwischen den Lastanschlüssen 4 der Stromrichter bzw. -zweige 2. Auf diese Weise werden die parallelen Stromrichter 2 während der Kommutierung des Laststromes auf bzw. von den Rücklaufdioden entkoppelt, und die sonst auftretende Fehlverteilung der Zweigströme kann auf ein unschädliches Mass reduziert werden.

Die Ringkerndrosseln weisen vorzugsweise ein nicht lineares Induktivitätsverhalten auf. Das heisst, für grössere Ströme wird die Induktivität immer kleiner. Ein solches Verhalten erreicht man beispielsweise durch Ringkerne 5, die aus einem weichmagnetischen, porösen Pulververbundwerkstoff bestehen. Die Ringkerne 5 können kreisringförmig aufgebaut sein oder eine andere geschlossene Form aufweisen. Die Lufteinschlüsse des porösen Materials bilden dann eine Art Luftspalt. Ein ähnliches Verhalten erreicht man auch durch Ringkerne die aus einem Ring hochpermeablen Materials mit einem Luftspalt bestehen. Die Ringkerne können in diesem Fall aus einer Vielzahl von geschichteten Folien bestehen.

Mit der Erfindung erreicht man also eine wirksame Stromgleichverteilung, bzw. die gegebenenfalls noch übrigbleibende Stromfehlverteilung kann von den Ringkerndrosseln aufgenommen werden.

### Bezugszeichenliste

- 1: Stromrichterschaltungsanordnung
- 2: Stromrichter, Stromrichterzweig
- 3: Leistungshalbleiterschalter
- 4: Lastanschluss
- 5: Ringkern
- 6: Laststromanschluss
- 7: Zwischenkreis

## Patentansprüche

1. Stromrichterschaltungsanordnung (1) mit einer Mehrzahl von parallel an einen Zwischenkreis (7) angeschlossenen Stromrichtern bzw. Stromrichterzweigen (2), die jeweils mit mindestens zwei in Serie geschalteten, im wesentlichen synchron angesteuerten Leistungshalbleiterschaltern (3), insbesondere IGBTs mit parallel geschalteter Rücklaufdiode, ausgerüstet sind, wobei ein mittlerer Anschluss der Serieschaltung der Leistungshalbleiterschalter einen Lastanschluss (4) bildet und zwischen den Lastanschlüssen von je zwei benachbarten Stromrichtern bzw. Stromrichterzweigen eine Ausgleichsdrossel geschaltet ist, dadurch gekennzeichnet, dass
- die Ausgleichsdrossel mindestens einen Ringkern (5) mit einer beliebigen geschlossenen Form umfasst,
- die Lastanschlüsse (4) zweier benachbarter Stromrichter bzw. Stromrichterzweige von unterschiedlichen Seiten durch jeden Ringkern (5) geschlauft sind und zu einem gemeinsamen Laststromanschluss (6) aller parallelen Stromrichter bzw. Stromrichterzweige zusammengeführt sind.

2. Stromrichterschaltungsanordnung nach Anspruch 1, dadurch gekennzeichnet, dass die Ausgleichsdrossel eine Induktivität bildet, deren Wert mit grösserem Strom nicht linear abnimmt.

3. Stromrichterschaltungsanordnung nach Anspruch 1 oder 2, dadurch gekennzeichnet, dass die Ringkerne (5) aus einem weichmagnetischen, porösen Pulververbundwerkstoff bestehen.

4. Stromrichterschaltungsanordnung nach Anspruch 1 oder 2, dadurch gekennzeichnet, dass die Ringkerne (5) aus einem Ring hochpermeablen Materials mit einem Luftspalt bestehen.
